# EUROPEAN PATENT APPLICATION

(11) **EP 3 909 846 A1**
(43) Date of publication of application: **17.11.2021**
(21) Application number: 21173403.3
(22) Date of filing: 11.05.2021
(51) Int. Cl.: B64C 11/44, H02J 50/12

(54) **WIRELESS POWER TRANSFORMATION FOR ROTATING PROPELLERS**

(30) Priority: 11.05.2020 US 202063022949 P
(71) Applicant: Hamilton Sundstrand Corporation, Charlotte, NC 28217-4578 (US)
(72) Inventor: CHOE, Jung Muk, Vernon (US); LEE, Yongduk, Vernon (US); YI, Junsok, Glastonbury (US); LEE, Jin, Glastonbury (US); WU, Xin, Glastonbury (US)
(74) Representative: Dehns

(57) **Abstract**

A system comprises a resonant coupling (102) having a first coil (104) and a second coil (106), wherein the first coil is mounted to a first body (108) that is stationary relative to a second body (110) that is configured to rotate relative to the first body, and wherein the second coil is mounted to the second body to rotate relative to the first coil. The first and second coils are configured so that alternating current in the first coil induces an alternating current in the second coil to transfer electrical power from the first coil to the second coil wirelessly. The first and second coils do not contact one another regardless of whether the first and second bodies rotate relative to one another.

## Description

### BACKGROUND

### 1. Field

The present disclosure relates to power transformation, and more particularly to power transformation across rotating interfaces such as in propellers in aerospace applications or the like.

### 2. Description of Related Art

Propeller blades in aircraft typically benefit from blade pitch control to help adjust or optimize propeller performance in varying speeds and conditions. Blade pitch control is normally achieved through hydraulics in the fixed, non-rotating frame of the aircraft.

The conventional techniques have been considered satisfactory for their intended purpose. However, there is an ever present need for improved systems and methods for controlling blade pitch in rotating propellers. This disclosure provides a solution for this need.

### SUMMARY

In accordance with at least one aspect of this disclosure a, system comprises a resonant coupling having a first coil and a second coil, wherein the first coil is mounted to a first body that is stationary relative to a second body that is configured to rotate relative to the first body, and wherein the second coil is mounted to the second body to rotate relative to the first coil. The first and second coils can be configured so that alternating current in the first coil induces an alternating current in the second coil to transfer electrical power from the first coil to the second coil wirelessly. The first and second coils do not contact one another regardless of whether the first and second bodies rotate relative to one another.

The first coil can comprise a spiral pattern defined in a first plane, and the second coil can follow a spiral pattern defined in a second plane spaced apart from and parallel to the first plane. The first plane and the second plane can remain parallel through an entire 360 degree rotation of the second body relative to the first body.

The second body can be a propeller with a plurality of blades with adjustable blade pitch. At least one electrical motor can be included in the propeller, and the at least one electrical motor can be electrically connected to receive power from the second coil, and can be mechanically connected to move one or more of the blades to change the blade pitch thereof. The at least one motor can include a respective motor for each respective one of the blades, each respective motor can be electrically connected to the second coil to receive power therefrom, and each respective motor can be mechanically connected to its respective one of the blades to control the blade pitch thererof. Each respective motor can be mounted in a fixed position relative to the propeller, and all of the respective motors can form a pattern that rotates relative to the first body as the propeller rotates.

The system can also include an inverter electrically connected to the first coil to convert a supply of DC power to AC power supplied to the first coil. The inverter can have a switching frequency matched to resonant frequencies of the first and second coils. The system can further include a DC power source electrically connected to supply the DC power to the inverter, and can include a rectifier electrically connected to the second coil to convert AC power from the second coil to DC current.

A method includes converting DC power to AC power, conducting the AC power through a first coil to generate an alternating magnetic field, generating AC power in a second coil within the alternating magnetic field while rotating the second coil relative to the first coil, converting the AC power in the second coil to DC power. The method can include rotating the second coil relative to the first coil, which can include rotating the second coil in a second plane defined by the second coil, and maintaining the first coil in a plane that is parallel to the first coil during a full 360 degree rotation of the first coil while maintaining a gap between the first and second planes.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic electrical circuit diagram of an electrical power transfer system constructed in accordance with the present disclosure;
Fig. 2 is a schematic exploded perspective view of embodiment of the electrical power transfer system of Fig. 1, showing a propeller constructed in accordance with the present disclosure;
Fig. 3 a schematic view of a portion of the system of Fig. 1 showing the first and second coil; and
Fig. 4 is a schematic diagram of a method of electrical power transfer in accordance with the present disclosure.

### DETAILED DESCRIPTION OF THE PREFERRED EMBODIMENTS

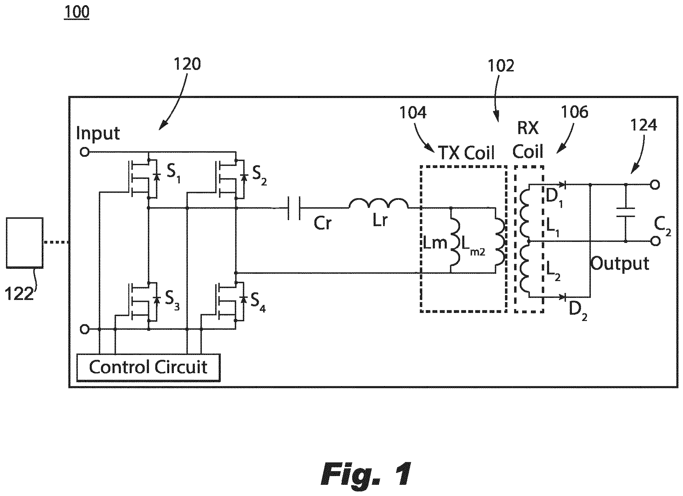

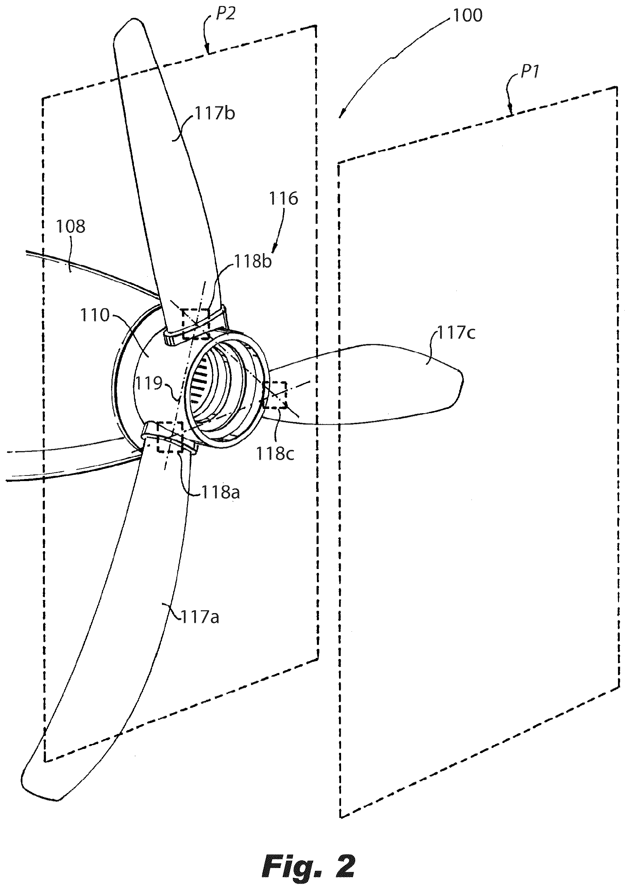

Reference will now be made to the drawings wherein like reference numerals identify similar structural features or aspects of the subject disclosure. For purposes of explanation and illustration, and not limitation, a partial view of an embodiment of a wireless power resonant coupling in accordance with the disclosure is shown in Fig. 1 and is designated generally by reference character 100. Other embodiments of systems in accordance with the disclosure, or aspects thereof, are provided in Figs. 2-5, as will be described. The systems and methods described herein can be used to wirelessly transfer power, for example for controlling pitch in a rotating propeller.

The system 100 includes a resonant coupling 102. The resonant coupling 102 includes capacitor Cᵣ, and inductors L_{r,} Lₘ, and Lₘ₂ on the transmission side TX, electrically connected as shown in Fig. 1. Capacitor Cᵣ is electrically connected in series with inductors Lᵣ and Lₘ, and inductor Lₘ₂ is electrically connected in parallel with inductor Lₘ. The resonant coupling 102 also includes inductors L₁ and L₂ on the receiver side RX, electrically connected in series with one another. The resonant coupling 102 includes a first coil 104, which includes inductors Lₘ and Lₘ₂ on the transmission sided TX and a second coil 106, including inductors L₁ and L₂ on the receiver side RX, electrically connected as shown in Fig. 1. The first coil 104 can be mounted to a first body 108 that is stationary relative to a second body 110. The second body 110 can be configured to rotate relative to the first body 108. The second coil 106 can mounted to the second body 110 to rotate with the second body 110 relative to the body 108 and the first coil 104. The first and second coils 104, 106 can be configured so that alternating current in the first coil 104 induces an alternating current in the second coil 106 to transfer electrical power from the first coil 104 to the second coil 106 wirelessly. The first and second coils 104, 106 do not contact one another regardless of whether the first and second bodies 108, 110 are rotating relative to one another, eliminating wires and/or contact friction, and the useable life of the system.

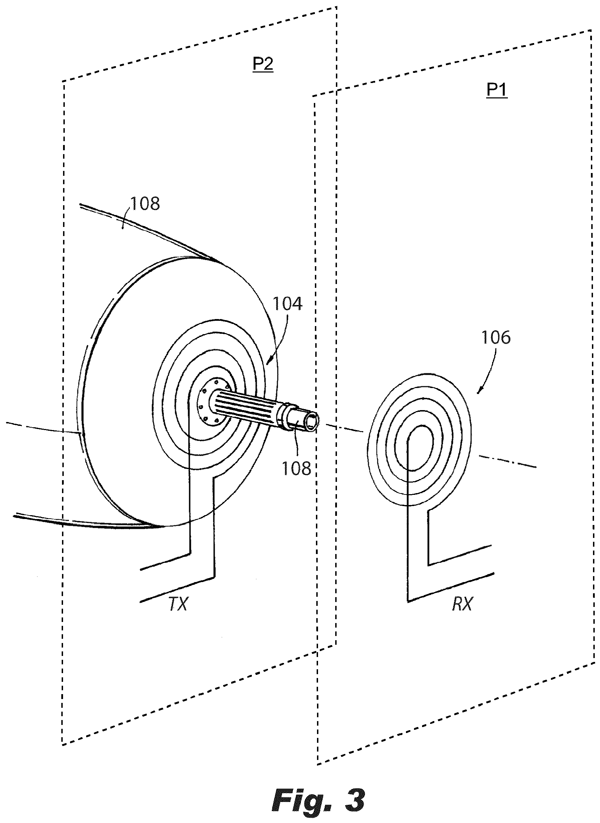

As shown in Fig. 3, the first coil 104 can follow a spiral pattern defined in a first plane P1 and the second coil 106 can follow a spiral pattern defined in a second plane P2 spaced apart from and parallel to the first plane P1. The number of turns in the spiral pattern of the coils is directly related to the inductance of the coil. As the number of turns increases, the inductance increases. The number of turns in the first and second coils 104, 106 should be such that the resonant frequency of the coil matches the switching speed of the inverter 120 shown in Fig. 1. The first plane P1 and the second plane P2 can remain parallel through an entire 360 degree rotation of the second body 110 relative to the first body 108.

Referring now to Fig. 2, the second body 110 can be a propeller 116 with a plurality of blades 117, each blade having an adjustable blade pitch. A plurality of electrical motors 118a-118c (e.g. brushless motors) are included in the propeller 116, each motor 118a-118c being a respective motor for each respective one of the blades 117a-117c. Each respective motor 118a-118c can be electrically connected to the second coil 106 to receive power therefrom. Each respective motor 118a-118c can also be mechanically connected to its respective one of the blades 117a-117c to control the blade pitch thereof. Each respective motor 118a-118c can be mounted in a fixed position relative to the propeller 116, i.e. onboard the propeller 116, and all of the respective motors 118a-118c can form a pattern that rotates relative to the first body 108 as the propeller 116 rotates. For example, the respective motors 118a-118c can form the triangle pattern 119 shown in Fig. 2.

With reference again to Fig. 1, the system 100 can include a pulse width modulation (PWM) inverter 120 having a plurality of switches S₁-S₄ electrically connected to the first coil 104 to convert a supply of DC power to AC power supplied to the first coil 104. The inverter 120 can have a switching frequency matched to resonant frequencies of the first and second coils 104, 106. The system 100 can include a DC power source 122 electrically connected to supply the DC power to the inverter 120. The system 100 includes a rectifier 124 that is electrically connected to the second coil 106 to convert AC power from the second coil 106 to DC current. The rectifier can include at least one diode (for example diodes D₁ and D₂), and at least one capacitor C₂, electrically connected as shown in Fig. 1.

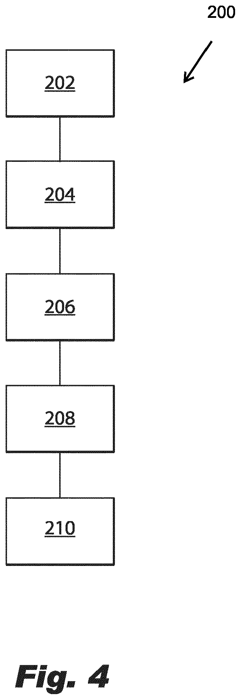

Fig. 4 shows a method 200 for wireless power transformation and transfer. The method 200 can include converting DC power to AC power, shown at box 202. At box 204, AC power can be conducted through a first coil 104 (e.g. as shown in Fig. 1) to generate an alternating magnetic field. Next, at box 206, AC power can be generated in a second coil 106 (e.g. as shown in Fig. 1) within the alternating magnetic field while rotating the second coil 106 relative to the first coil 104. At box 208, AC power in the second coil 106 can be converted to DC power. Shown in box 210, the method can further include rotating the second coil 106 relative to the first coil 104. The rotation can include rotating the second coil 106 in a second plane 114 defined by the second coil 106 and maintaining the first coil 104 in a plane 112 that is parallel to the first coil 104 during a full 360 degree rotation of the first coil 104 while maintaining a gap between the first and second planes 112, 114, for example as indicated in Fig. 2.

The methods and systems of the present disclosure, as described above and shown in the drawings, can provide for power transformation and transfer e.g. for powering motors on a rotating propeller to control the pitch. As disclosed herein, power transformation can occur regardless of whether a propeller is rotating, or how fast it is rotating. Further, the system can eliminate wire and/or contact friction during electrical power generation which can increase the usable life of the system. The system as disclosed can provide an additional advantage in that the system will always align between transceiver coil and receiver coil because of their fixed alignment with the center shaft.

While the apparatus and methods of the subject disclosure have been shown and described with reference to preferred embodiments, those skilled in the art will readily appreciate that changes and/or modifications may be made thereto without departing from the scope of the invention as defined by the claims. These and other features of the systems and methods of the subject disclosure will become more readily apparent to those skilled in the art from the following detailed description of the preferred embodiments taken in conjunction with the drawings.

## Claims

1. A system comprising:
a resonant coupling (102) having a first coil (104) and a second coil (106), wherein the first coil is mounted to a first body (108) that is stationary relative to a second body (110) that is configured to rotate relative to the first body, and wherein the second coil is mounted to the second body to rotate relative to the first coil.

2. The system as recited in claim 1, wherein the first and second coils (104, 106) are configured so that alternating current in the first coil induces an alternating current in the second coil to transfer electrical power from the first coil to the second coil wirelessly.

3. The system as recited in claim 2, wherein the first and second coils (104, 106) do not contact one another regardless of whether the first and second bodies rotate relative to one another.

4. The system as recited in any preceding claim, wherein the first coil follows a spiral pattern defined in a first plane.

5. The system as recited in claim 4, wherein the second coil follows a spiral pattern defined in a second plane spaced apart from and parallel to the first plane.

6. The system as recited in claim 5, wherein the first plane and the second plane remain parallel through an entire 360 degree rotation of the second body relative to the first body.

7. The system as recited in any preceding claim, wherein the second body (116) is a propeller with a plurality of blades (117) with adjustable blade pitch.

8. The system as recited in claim 7, wherein at least one electrical motor (118a-118c) is included in the propeller (116), wherein the at least one electrical motor is electrically connected to receive power from the second coil (106), and is mechanically connected to move one or more of the blades (117) to change the blade pitch thereof.

9. The system as recited in claim 8, wherein the at least one motor (118a-118c) includes a respective motor for each respective one of the blades (117), wherein each respective motor is electrically connected to the second coil (106) to receive power therefrom, and wherein each respective motor is mechanically connected to its respective one of the blades to control the blade pitch thererof.

10. The system as recited in claim 9, wherein each respective motor (118a-118c) is mounted in a fixed position relative to the propeller (116), and wherein all of the respective motors form a pattern that rotates relative to the first body as the propeller rotates.

11. The system as recited in any preceding claim, further comprising an inverter (120) electrically connected to the first coil to convert a supply of DC power to AC power supplied to the first coil, and optionally wherein the inverter has a switching frequency matched to resonant frequencies of the first and second coils.

12. The system as recited in claim 11, further comprising a DC power source (122) electrically connected to supply the DC power to the inverter.

13. The system as recited in any preceding claim, further comprising a rectifier (124) electrically connected to the second coil to convert AC power from the second coil to DC current.

14. A method comprising:
converting DC power to AC power;
conducting the AC power through a first coil (104) to generate an alternating magnetic field;
generating AC power in a second coil (106) within the alternating magnetic field while rotating the second coil relative to the first coil; and
converting the AC power in the second coil to DC power.

15. The method as recited in claim 14, wherein rotating the second coil relative to the first coil includes rotating the second coil in a second plane defined by the second coil and maintaining the first coil in a plane that is parallel to the first coil during a full 360 degree rotation of the first coil while maintaining a gap between the first and second planes.
